# EUROPÄISCHE PATENTSCHRIFT

(11) **EP 0 672 284 B1**
(45) Veröffentlichungstag und Bekanntmachung des Hinweises auf die Patenterteilung: **18.06.1997**
(21) Anmeldenummer: 94900737.1
(22) Anmeldetag: 29.11.1993
(51) Int. Cl.: G08C 23/00, H04B 10/00

(54) **MESSVERFAHREN UND MESSVORRICHTUNG MIT ANALOGER OPTISCHER SIGNALÜBERTRAGUNG**
MEASURING PROCESS AND DEVICE WITH ANALOG OPTICAL SIGNAL TRANSMISSION
PROCEDE ET DISPOSITIF DE MESURE A TRANSMISSION OPTIQUE ANALOGIQUE DE SIGNAUX

(30) Priorität: 03.12.1992 DE 4240721
(43) Veröffentlichungstag der Anmeldung: 20.09.1995
(73) Patentinhaber: SIEMENS AKTIENGESELLSCHAFT, 80333 München (DE)
(72) Erfinder: GROSS, Walter, D-91074 Herzogenaurach (DE)
(86) Internationale Anmeldenummer: DE9301137
(87) Internationale Veröffentlichungsnummer: WO9412960

(56) Entgegenhaltungen:
- EP-A- 0 009 220
- PATENT ABSTRACTS OF JAPAN vol. 4, no. 162 (E-033)12. November 1980 & JP,A,55 109 044 (SUMITOMO ELECTRIC INC LTD) 21. August 1980
- PATENT ABSTRACTS OF JAPAN vol. 9, no. 258 (E-350)16. Oktober 1985 & JP,A,60 106 240 (FUJI DENKO SEIZO KK) 11. Juni 1985

## Beschreibung

Die Erfindung betrifft ein Verfahren zum Messen einer Meßgröße gemäß dem Oberbegriff des Anspruchs 1 und eine Vorrichtung zum Messen einer Meßgröße gemäß dem Oberbegriff des Anspruchs 9. Ein solches Verfahren und eine solche Vorrichtung sind beispielsweise aus "Sensors and Actuators A", 25 - 27 (1991), Seiten 475 bis 480, bekannt.

Optische Übertragungssysteme für die Übertragung von Meßsignalen zwischen wenigstens einem elektrischen Meßkopf mit einem Sensor und einer Fußstation mit einer Auswerteelektronik werden bevorzugt dort eingesetzt, wo entweder eine hohe Potentialtrennung oder eine hohe elektromagnetische Verträglichkeit (EMV) für die Übertragungsstrecke oder auch beides gefordert sind. Beispiele für solche Anwendungsbereiche sind die Strommessung in Hochspannungsanlagen und die EKG-Atem- und Pulsmessung von Patienten in der Kernspintomographie.

Es sind faseroptische Hybrid-Sensorsysteme bekannt, bei denen der Meßkopf und die Fußstation ihre Energie von jeweils einer elektrischen Versorgungseinheit beziehen und die Meßdaten des Sensors faseroptisch vom Meßkopf zur Auswerteelektronik übertragen werden. Dazu ist im Meßkopf ein elektrooptischer Signalwandler vorgesehen, der von der dem Meßkopf zugeordneten Versorgungseinheit mit einem Arbeitspunkt-Strom für eine lichtemittierende Diode (LED) versorgt wird und die Meßsignale in optische Signale umwandelt.

Diese optischen Signale werden über ein Lichtfaserbündel oder Einzellichtwellenleiter zu einem optoelektrischen Signalwandler in der Fußstation übertragen und wieder in elektrische Signale umgewandelt. Diese elektrischen Signale werden im allgemeinen in einer Verstärkereinheit verstärkt.

Ist die elektrische Versorgungseinheit für den Meßkopf eine externe Spannungsquelle, so sind elektrische Leitungen zwischen der Spannungsquelle und dem Meßkopf erforderlich, die eine hinreichende Isolation des Meßkopfes erschweren. Als Versorgungseinheit in dem Meßkopf kann daher eine Batterie vorgesehen sein. Eine Batterie hat jedoch eine begrenzte Lebensdauer und muß deshalb regelmäßig ausgewechselt werden. Es sind auch Sensorsysteme bekannt, bei denen die elektrische Energie aus dem Umfeld gewonnen wird, beispielsweise induktiv aus einem Stromnetz oder mit Sonnenenergie. Problematisch ist dabei jedoch die mangelnde Zuverlässigkeit dieser Energiequelle, wenn der Strom Null ist bzw. die Sonne nicht scheint.

Eine hohe Isolation sowie eine dauerhafte und zuverlässige Energieversorgung des Meßkopfes werden in einem weiteren bekannten faseroptischen Hybrid-Sensorsystem dadurch erreicht, daß auch die Versorgungsenergie für den Meßkopf, insbesondere für den Sensor und den Signalwandler, optisch übertragen wird. Dazu ist in der Fußstation neben der Auswerteelektronik eine optische Leistungsquelle, beispielsweise eine Laserdiode, vorgesehen, deren optische Energie über einen Lichtwellenleiter zu einem optoelektrischen Wandler im Meßkopf, vorzugsweise einem besonders gestalteten GaAs-Photoelementarray, übertragen wird. Dieser Wandler ist dann als Versorgungseinheit für den Sensor und den Signalwandler im Meßkopf vorgesehen ("Sensors and Actuators", 25-27 (1991), Seiten 475-480).

Verwendet man zur Übertragung der Meßdaten analoge optische Signale, so können der Arbeitspunkt des Systems und damit die Meßdaten durch Änderungen der Umgebungstemperatur, Alterungserscheinungen in den elektrooptischen und optoelektrischen Wandlern sowie Änderungen des Verstärkungsfaktors und Dämpfungsänderungen in der optischen Übertragungsstrecke verfälscht werden. Aus diesem Grund werden in den bekannten Systemen bisher frequenzanaloge oder digitale optische Signale zur Übertragung der Meßdaten verwendet. Die zur Umwandlung der analogen Signale in frequenzanaloge Signale eingesetzten Spannungs-Frequenz-Wandler (VCO) sind in ihren Übertragungsbandbreiten relativ begrenzt und benötigen bei Übertragungsraten im MHz-Bereich Eigenenergien von etwa 500 mW und mehr. Die A/D-Konverter zum Umwandeln der analogen in digitale Signale sind andererseits verhältnismäßig langsam und haben für eine anzustrebende Genauigkeit von unter 0,1 % einen beträchtlichen Eigenenergiebedarf. Eine analoge Übertragung der optischen Signale hat dagegen den Vorteil einer hohen Übertragungsrate mit einer großen Bandbreite bei einem zugleich vergleichsweise geringen Energiebedarf.

Aus der EP-A-0 009 220 sind ein Meßverfahren und eine Meßvorrichtung mit optischer Übertragung der Energie für einen in einem Sender angeordneten Sensor zum Messen einer Meßgröße und mit optischer Übertragung von Signalen von einem elektrooptischen Signalwandler im Sender zu einem optoelektrischen Signalwandler in einem Empfänger bekannt. Bei diesem bekannten Verfahren und der zugehörigen Vorrichtung wird dem elektrooptischen Signalwandler in einem Meßmodus das in einem Summationsglied gebildete Differenzsignal aus dem Meßsignal des Sensors im Sender und einem optisch von dem Empfänger zum Sender übertragenen elektrischen Rückführungssignal zugeführt. Dieses Differenzsignal wird durch ein Kompensationsverfahren während der Messung auf Null geregelt. Eine dazu erforderliche Kompensationsspannung im Empfänger wird dann als eigentliches Meßsignal verwendet. Durch diese Maßnahme wird der Leistungsverbrauch im Sender reduziert. Neben dem Meßmodus ist auch ein Kalibriermodus zum Kalibrieren der Verstärkung des Rückführungssignals offenbart. Im Kalibriermodus werden während zeitlich begrenzter Kalibrierungsintervalle im Sender ein Kalibrierungssignal anstelle des Meßsignals sowie das Rückführungssignal dem Summationsglied zugeführt. Mit Hilfe eines weiteren Kalibrierungssignals im Empfänger wird damit die Verstärkung des zum Verstärken des Rückführungssignals vorgesehenen Verstärkers im Empfänger kalibriert. Der Arbeitspunkt des elektrooptischen Signalwandlers ist auf Null eingestellt. Durch eine Rückführung über einen Widerstand und das Summationsglied sowie einen Verstärker wird der Nullpunkt des elektrooptischen Signalwandlers stabilisiert. Diese Stabilisierung des Arbeitspunktes findet statt sowohl im Meßmodus als auch im Verstärkungskalibriermodus.

Aus Patent Abstracts of Japan, Volume 4, No. 162 (E-033) und der zugehörigen JP-A-55 109 044 ist eine Meßvorrichtung mit einem optischen Übertragungssystem zum Übertragen des Meßsignals eines Sensors als analoges optisches Signal bekannt. Ein lichtemittierendes Element wandelt den Meßstrom eines analogen Sensors in ein analoges optisches Signal um, das über eine optische Übertragungsstrecke zu einem Fotodetektor übertragen wird, der das optische Signal wieder in ein elektrisches Signal umwandelt. Dieses elektrische Signal des Fotodetektors wird einem Schaltkreis zugeführt. Zum Kalibrieren des optischen Übertragungssystems wird dem lichtemittierenden Element ein vorgegebener, fester Kalibrierstrom zugeführt, und der Schaltkreis vergleicht das elektrische Signal des Fotodetektors mit einem gespeicherten Signalwert. Zum Erzeugen des festen Kalibrierstromes wird ein Kalibriersignal von dem Schaltkreis optisch zu einem weiteren Fotodetektor übertragen und aus dem Kalibriersignal wird der Kalibrierstrom abgeleitet.

Der Erfindung liegt nun die Aufgabe zugrunde, ein Meßverfahren und eine Meßvorrichtung mit analoger optischer Signalübertragung anzugeben, bei denen störende Einflüsse auf den Arbeitspunkt des Übertragungssystems für die Meßdaten korrigiert werden. Außerdem soll auch die Verstärkung der Meßsignale korrigiert werden können.

Diese Aufgabe wird gemäß der Erfindung gelöst mit den Merkmalen des Anspruchs 1 bzw. des Anspruchs 9.

In einem Meßsystem mit einer optischen Übertragung der Energie für einen Sensor und einer optisch analogen Übertragung der Meßsignale des Sensors ist gemäß der Erfindung in einem Arbeitspunkt-Korrekturmodus ein Regelkreis zum Einstellen des Arbeitspunktes des Signalübertragungssystems vorgesehen. Dieses Signalübertragungssystem besteht aus einem elektrooptischen Signalwandler, in dem die Meßsignale in analoge optische Signale umgewandelt werden, einer optischen Übertragungsstrecke für diese optischen Signale und einem optoelektrischen Signalwandler, in dem die optischen Signale in elektrische Auswertesignale umgewandelt werden.

An den elektrooptischen Signalwandler wird ein Meßsignal Null angelegt und das entsprechende Auswertesignal als Regelgröße des Regelkreises mit einem Auswertesignal-Sollwert verglichen. Es wird nun ein Arbeitspunkt-Strom für den elektrooptischen Signalwandler solange verändert, bis die Regeldifferenz unter einem vorgegebenen Toleranzwert liegt. Mit dem derart korrigierten Arbeitspunkt des elektrooptischen Signalwandlers und damit des Signalübertragungssystems wird wieder im normalen Meßmodus gemessen, wobei an den elektrooptischen Signalwandler das Meßsignal des Sensors angelegt wird.

Für das An- und Abschalten der Regelung ist vorzugsweise eine automatische Ablaufsteuerung vorgesehen, die vorzugsweise in regelmäßigen Abständen eine Korrektur des Arbeitspunktes veranlaßt. Der Arbeitspunkt-Korrekturmodus kann allerdings auch manuell ein- bzw. ausgeschaltet werden.

In einer besonders vorteilhaften Weiterbildung ist neben dem Regelkreis im Arbeitspunkt-Korrekturmodus ein weiterer Regelkreis in einem Verstärkungs-Korrekturmodus für den Verstärkungsfaktor einer Verstärkereinheit vorgesehen. In dieser Verstärkereinheit werden die Auswertesignale des optoelektrischen Signalwandlers in um den Verstärkungsfaktor verstärkte Ausgangssignale umgewandelt. Der Verstärkungsfaktor kann kleiner, gleich oder größer als eins sein. An den elektrooptischen Signalwandler wird dazu ein Referenz-Meßsignal angelegt und das entsprechende Ausgangssignal als Regelgröße dieses zweiten Regelkreises mit einem vorgegebenen, auf das Referenz-Meßsignal abgestimmten Ausgangssignal-Sollwert verglichen. Es wird nun der Verstärkungsfaktor der Verstärkereinheit als Stellgröße dieses Verstärkungs-Regelkreises solange verändert, bis die Regeldifferenz unter einem vorgegebenen Toleranzwert liegt. Auch für diesen Verstärkungs-Korrekturmodus ist vorzugsweise wieder eine automatische Ablaufsteuerung und/oder eine Möglichkeit zum manuellen Ein- und Ausschalten der Regelung vorgesehen.

In einer bevorzugten Ausführungsform ist eine gemeinsame Ablaufsteuerung vorgesehen, die erst eine Korrektur des Arbeitspunktes und direkt im Anschluß eine Korrektur des Verstärkungsfaktors veranlaßt.

Weitere vorteilhafte Ausführungsformen und Weiterbildungen gemäß der Erfindung ergeben sich aus den Unteransprüchen.

Zur weiteren Erläuterung der Erfindung wird auf die Zeichnung Bezug genommen, in deren
- FIG. 1 und 2: jeweils eine Ausführungsform einer Vorrichtung zum Messen einer Meßgröße mit einem Regelkreis zur Korrektur des Arbeitspunktes eines optisch analogen Übertragungssystems für die Meßsignale eines Sensors,
- FIG. 3: eine Ausführungsform einer Vorrichtung zum Messen einer Meßgröße mit einem Regelkreis zur Korrektur des Verstärkungsfaktors einer Verstärkereinheit für die optisch analog übertragenen Signale,
- FIG. 4: eine Ausführungsform eines elektrooptischen Signalwandlers zum Übertragen der Meßsignale,
- FIG. 5 und 6: jeweils eine Ausführungsform eines Reglers zur Arbeitspunkt- und Verstärkungskorrektur und
- FIG. 7: eine Ausführungsform eines elektrooptischen Leistungswandlers zur optischen Übertragung der Energie für einen Sensor sowie von Steuersignalen für die Regelungen
schematisch dargestellt sind. In den Figuren sind einander entsprechende Teile mit denselben Bezugszeichen versehen.

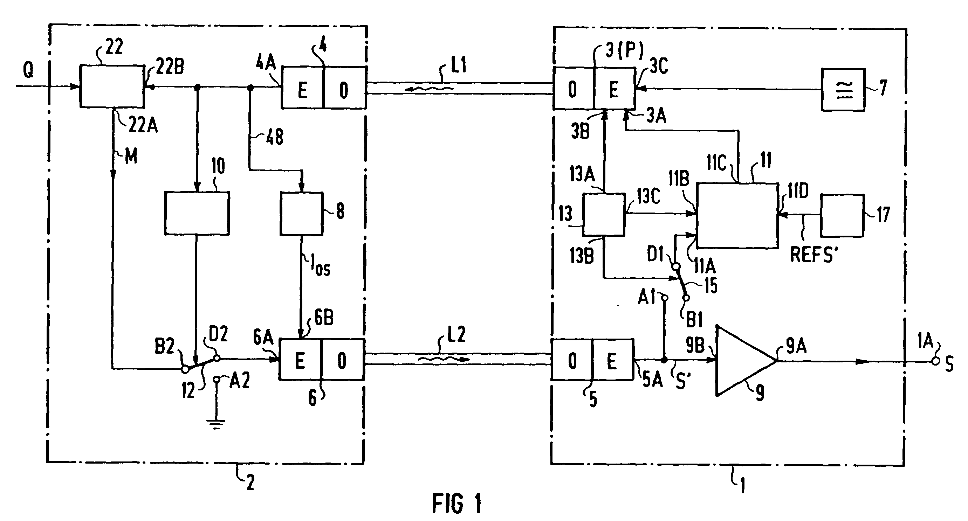

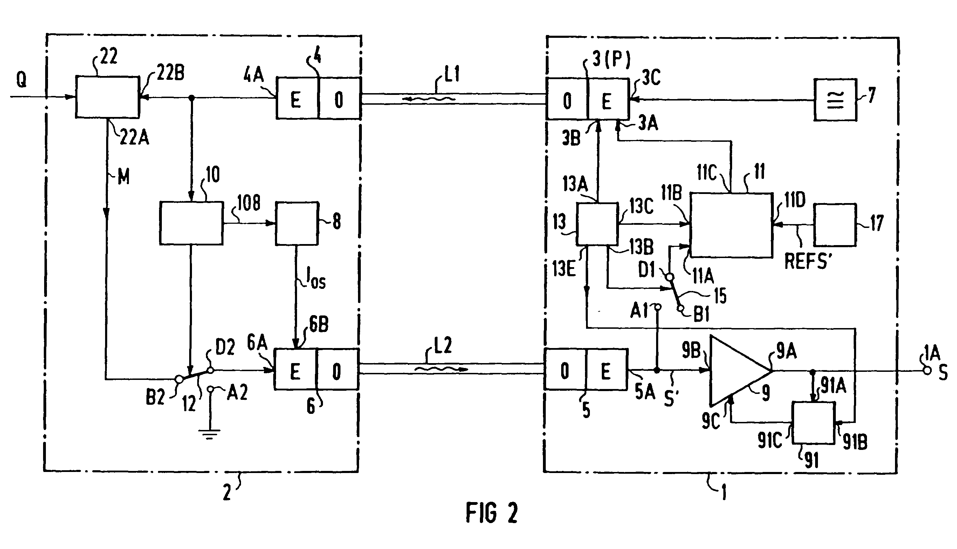

In den in den FIG. 1 und 2 dargestellten Ausführungsformen einer Vorrichtung gemäß der Erfindung sind eine Fußstation mit 1 und ein Meßkopf mit 2 bezeichnet. Die Fußstation 1 enthält einen elektrooptischen (E/O)-Leistungswandler 3, dessen einer Eingang 3C mit einer elektrischen Energieversorgungseinheit 7 elektrisch verbunden ist, und einen optoelektrischen (O/E)-Signalwandler 5, dessen einer Ausgang 5A über eine Verstärkereinheit 9 mit einem Ausgang 1A der Fußstation 1 elektrisch verbunden ist. In dem Meßkopf 2 ist ein Sensor 22 vorgesehen, der eine physikalische Größe Q in ein elektrisches Meßsignal M umwandelt, das an einem Ausgang 22A des Sensors 22 anliegt. Ferner enthält der Meßkopf 2 einen elektrooptischen (E/O)-Signalwandler 6, der mit einem Eingang 6A über eine Schalteinrichtung 12 an den Ausgang 22A des Sensors 22 angeschlossen werden kann, und einen optoelektrischen (O/E)-Leistungswandler 4, dessen Ausgang 4A mit einem Eingang 22B des Sensors 22 zur Versorgung des Sensors 22 mit elektrischer Energie verbunden ist. Diese Energie wird nun optisch über einen Leistungslichtwellenleiter L1 von dem elektrooptischen Leistungswandler 3 in der Fußstation 1 zum optoelektrischen Leistungswandler 4 im Meßkopf 2 übertragen. Die beiden Leistungswandler 3 und 4 können allerdings auch beispielsweise über die Luft optisch gekoppelt sein durch ein entsprechendes optisches Übertragungssystem mit Lasern und Linsen und/oder Spiegeln. Die Meßsignale M des Sensors 22 werden ebenfalls optisch über einen Signallichtwellenleiter L2 als analoge optische Signale von dem elektrooptischen Signalwandler 6 im Meßkopf 2 zum optoelektrischen Signalwandler 5 in der Fußstation 1 übertragen. Auch die beiden Signalwandler 5 und 6 können alternativ über die Luft optisch gekoppelt sein. Durch die optische Übertragung sowohl der elektrischen Energie für den Sensor 22 als auch der Meßsignale M des Sensors 22 erreicht man eine ausgezeichnete Potentialtrennung und EMV zwischen der Fußstation 1 und dem Meßkopf 2. An dem Ausgang 5A des optoelektrischen Signalwandlers 5 liegt ein elektrisches Auswertesignal S', das durch Umwandlung des über den Signallichtwellenleiter L2 übertragenen analogen optischen Signals erzeugt wird. Dieses Auswertesignal S' wird in der Verstärkereinheit 9 in ein Ausgangssignal S umgewandelt, das an dem Ausgang 1A der Fußstation 1 anliegt. Der Verstärkungsfaktor F für die lineare Verstärkung des Auswertesignals S' in der Verstärkereinheit 9 kann dabei größer, gleich oder kleiner als eins sein.

Für den Betrieb eines mit 0 bezeichneten optischen Sendeteils des elektrooptischen Signalwandlers 6 wird einem mit E bezeichneten elektrischen Betriebsteil dieses Signalwandlers 6 ein vorgegebener Arbeitspunkt-Strom I_{OS} zugeführt. Dazu ist ein Eingang 6B des elektrooptischen Signalwandlers 6 mit einer Arbeitspunkt-Kontrolleinheit 8 verbunden.

Diese Arbeitspunkt-Kontrolleinheit 8 ist in der Ausführungsform gemäß FIG. 1 mit dem Ausgang 4A des optoelektrischen Leistungswandler 4 über eine elektrische Verbindung 48 verbunden und leitet aus dem Strom oder der Spannung an diesem Ausgang 4A den Arbeitspunkt-Strom I_{OS} ab.

Aufgrund von Änderungen in den Übertragungs- und/oder Umwandlungseigenschaften des Systems kann nun der Strom bzw. die Spannung am Ausgang 4A des optoelektrischen Leistungswandlers 4 variieren. Dadurch weicht aber auch der Arbeitspunkt-Strom I_{OS} von seinem voreingestellten Wert ab und der Arbeitspunkt des elektrooptischen Signalwandlers 6 - und damit des gesamten Übertragungssystems - verschiebt sich entsprechend auf der Kennlinie des Signalwandlers 6.

Um diese Verschiebung des Arbeitspunktes zu korrigieren, wird nun gemäß der Erfindung ein Arbeitspunkt-Korrekturmodus mit einer Regelung vorgesehen. In diesen Arbeitspunkt-Korrekturmodus kann mit einer Steuerung per Hand oder vorzugsweise mit einer automatischen Ablaufsteuerung in einer Überwachungseinheit 13 in der Fußstation 1 geschaltet werden.

An den Eingang 6A des elektrooptischen Signalwandlers 6 wird mit Hilfe der Schalteinrichtung 12 ein Nullsignal gelegt, indem eine Verbindung zwischen einem mit dem Eingang 6A verbundenen Schaltkontakt D2 und einem auf Nullpotential liegenden Schaltkontakt A2 der Schalteinrichtung 12 hergestellt wird.

Zugleich wird mittels einer Schalteinrichtung 15 in der Fußstation 1 an einen Eingang 11A eines Reglers 11 das Auswertesignal S' angelegt, indem ein mit dem Ausgang 5A des Signalwandlers 5 verbundener Schaltkontakt A1 und ein mit dem Eingang 11A des Reglers 11 verbundener Schaltkontakt D1 kurzgeschlossen werden. Außerdem schaltet die Überwachungseinheit 13 den Regler 11 ein.

Die Ablaufsteuersignale zum Schalten der Schalteinrichtung 12 werden von einem Ausgang 13A der Überwachungseinheit 13 in der Fußstation 1 auf einen Eingang 3B des elektrooptischen Leistungswandlers 3 gegeben, in dem Leistungswandler 3 in optische, modulierte Steuersignale umgewandelt, über den Leistungslichtwellenleiter L1 zum optoelektrischen Leistungswandler 4 im Meßkopf 2 übertragen, dort wieder in elektrische, modulierte Steuersignale umgewandelt und in einem mit dem Ausgang 4A des Leistungswandlers 4 verbundenen Dekodierer 10 in für die Schalteinrichtung 12 verständliche Steuersignale demoduliert. Die Ablaufsteuersignale zum Schalten der Schalteinrichtung 15 werden direkt von einem Ausgang 13B der Überwachungseinheit 13 zur Schalteinrichtung 15 übertragen. Die Ablaufsteuersignale zum Ein- und Ausschalten des Reglers 11 werden von einem Ausgang 13C der Überwachungseinheit 13 zu einem Eingang 11B des Reglers 11 übertragen.

Die Regelgröße der nun durchgeführten Regelung ist das an dem Ausgang 5A des optoelektrischen Signalwandlers 5 anliegende Auswertesignal S'. Die Führungsgröße der Regelung ist ein vorgegebener Auswertesignal-Sollwert REFS', der auf das am Signalwandler 6 anliegende Nullsignal abgestimmt ist. Dieser Auswertesignal-Sollwert REFS' ist in einem Referenzsignalgeber 17 gespeichert, der an einen Eingang 11D des Reglers 11 angeschlossen ist. In dem Regler 11 wird nun das Auswertesignal S' mit dem Auswertesignal-Sollwert REFS' verglichen, und in Abhängigkeit von der Regeldifferenz REFS'-S' wird die Leistung P des elektrooptischen Leistungswandlers 3 verändert. Das Stellglied dieses Regelkreises ist somit der elektrooptische Leistungswandler 3 und die Stellgröße ist seine Sendeleistung P. Die Steuersignale zum Stellen dieser Leistung P werden von einem Ausgang 11C des Reglers 11 zu einem Eingang 3A des Leistungswandlers 3 übertragen. Eine Veränderung der Leistung P des Leistungswandlers 3 in der Fußstation 1 bewirkt nun direkt eine entsprechende, gewünschte Veränderung des Arbeitspunkt-Stromes I_{OS}, der von der Arbeitspunkt-Kontrolleinheit 8 aus dem Strom am Ausgang 4A des Leistungswandlers 4 im Meßkopf 2 abgeleitet wird. Diese Regelung wird solange durchgeführt, bis die Regeldifferenz REFS'-S' unter einem vorgegebenen Toleranzwert liegt, und die Leistung P wird dann auf den erreichten Wert fest eingestellt.

Nun wird von dem Arbeitspunkt-Korrekturmodus wieder in den Meßmodus umgeschaltet, indem die Überwachungseinheit 13 über den Dekodierer 10 die Schalteinrichtung 12 an einen Schaltkontakt B2 mit dem Meßsignal M umschaltet, die Schalteinrichtung 15 an einen Schaltkontakt B1 mit Nullpotential umschaltet und den Regler 11 abschaltet.

Im Unterschied zu der Ausführungsform gemäß FIG. 1 fehlt in der Ausführungsform gemäß FIG. 2 die elektrische Verbindung 48 der Arbeitspunkt-Kontrolleinheit 8 mit dem Ausgang 4A des Leistungswandlers 4. Dafür ist eine zusätzliche elektrische Verbindung 108 des Dekodierers 10 mit der Arbeitspunkt-Kontrolleinheit 8 vorgesehen, über die eine Arbeitspunkt-Steuerspannung vom Dekodierer 10 an die Arbeitspunkt-Kontrolleinheit 8 gegeben werden kann zur Steuerung des Arbeitspunkt-Stromes I_{OS}. Die dazu erforderlichen Steuersignale werden als digitale Signale von der Überwachungseinheit 13 erzeugt und auf den Eingang 3B des Leistungswandlers 3 gegeben, als entsprechend modulierte optische Signale dann über den Leistungslichtwellenleiter L1 vom Leistungswandler 3 zum Leistungswandler 4 übertragen, dort wieder in elektrische Signale umgewandelt und schließlich im Dekodierer 10 dekodiert.

Die Stellgröße des Regelkreises zur Arbeitspunkt-Korrektur ist in dieser Ausführungsform somit nicht die Leistung P des elektrooptischen Leistungswandlers 3, sondern der Arbeitspunkt-Strom I_{OS} selbst. Stellglied ist die Arbeitspunkt-Kontrolleinheit 8. Die Regelgröße ist dagegen auch in dieser Ausführungsform das Auswertesignal S' und die Führungsgröße wieder der Auswertesignal-Sollwert REFS'. Die Leistungswandler 3 und 4 mit dem dazwischen angeordneten Leistungslichtwellenleiter L1 und die elektrische Verbindung vom Ausgang 4A des Leistungswandlers 4 zum Dekodierer 10 gehören nun jedoch nicht zur Regelstrecke wie bei der Ausführungsform gemäß FIG. 1, sondern sind lediglich zum Übertragen der Stellsignale von der Übertragungseinheit 13 zur Arbeitspunkt-Kontrolleinheit 8 vorgesehen und damit Bestandteil der Stellstrecke oder des "Stellantriebs".

Um Störeinflüsse wie Änderungen der Temperatur auf die Verstärkereinheit 9 zu kompensieren, ist in einer vorteilhaften Ausführungsform ein Stromregler 91 vorgesehen, der über einen Eingang 91A mit dem Ausgang 9A der Verstärkereinheit 9, einen weiteren Eingang 91B mit einem Ausgang 13E der Überwachungseinrichtung 13 und einen Ausgang 91C mit einem Steuereingang 9C der Verstärkereinheit 9 verbunden ist. Dieser Stromregler 91 regelt nach vollzogener Arbeitspunktkorrektur das Ausgangssignal S auf Null, wenn das auf seinen Sollwert REFS' geregelte Auswertesignal S' für den Arbeitspunkt am Eingang 9B der Verstärkereinheit 9 anliegt. Dazu führt der Stromregler 91 der Verstärkereinheit 9 über den Steuereingang 9C einen Kompensationsstrom als Stellgröße zu. Dieser Abgleichvorgang für das Ausgangssignal S wird von der Überwachungseinheit 13 im Anschluß an die Arbeitspunktkorrektur veranlaßt, kann allerdings auch manuell durchgeführt werden.

In einer nicht dargestellten, weiteren Ausführungsform ist anstelle des Stromreglers 91 und seiner Anschlüsse ein Koppelkondensator vor den Eingang 9B der Verstärkereinheit 9 geschaltet, der den Gleichspannungsanteil im Auswertesignal S' für den Arbeitspunkt unterdrückt und einen Wechselspannungsanteil unverändert durchläßt. Bei reinen Wechselspannungs-Meßsignalen wird damit das Ausgangssignal S Null, wenn kein Meßsignal vorliegt.

Diese beiden Ausführungsformen zum Einstellen des Ausgangssignals S auf Null, wenn das Auswertesignal S' seinem Sollwert REFS' entspricht, können auch mit den anderen, nachstehend beschriebenen Ausführungsformen und mit der Ausführungsform gemäß FIG. 1 kombiniert werden.

Wenn der Arbeitspunkt des Übertragungssystems im Arbeitspunkt-Korrekturmodus auf seinen gewünschten Wert eingestellt worden ist, ist es besonders vorteilhaft, auch den Verstärkungsfaktor F der Verstärkereinheit 9 zu korrigieren. Eine solche Verstärkungsanpassung ist insbesondere bei einer Nichtlinearität der Kennlinie des Systems von Vorteil.

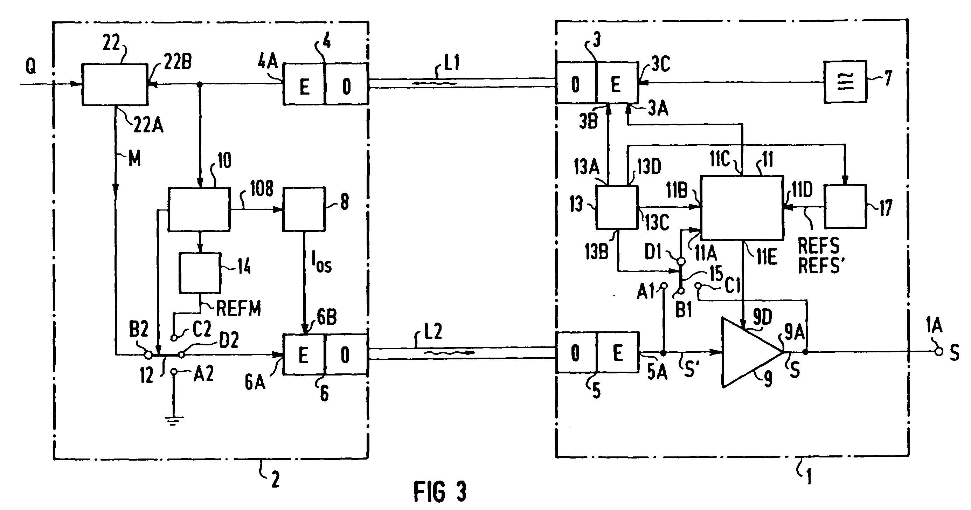

In FIG. 3 ist eine Ausführungsform einer Vorrichtung gemäß der Erfindung dargestellt, bei der neben einem ersten Regelkreis für die Arbeitspunkt-Korrektur ein zweiter Regelkreis für einen Verstärkungs-Korrekturmodus vorgesehen ist. Für diesen zweiten Regelkreis sind nun folgende weitere Maßnahmen vorgesehen:

Die Schalteinrichtung 15 hat neben den Schaltkontakten A1, B1 und D1 einen weiteren Schaltkontakt C1, der mit dem Ausgang 9A der Verstärkereinheit 9 verbunden ist und an dem somit das Ausgangssignal S anliegt. Im Meßkopf 2 ist ein Referenzsignalgeber 14 vorgesehen, der mit dem Dekodierer 10 elektrisch verbunden ist. Die Schalteinrichtung 12 ist mit einem zusätzlichen Schaltkontakt C2 versehen, an den ein Referenz-Meßsignal REFM des Referenzmeßsignalgebers 14 angelegt werden kann. Es können natürlich auch getrennte Schalteinrichtungen für Arbeitspunkt-Korrektur und Verstärkungskorrektur vorgesehen sein. Zum Steuern des Verstärkungsfaktors F ist ferner ein Ausgang llE des Reglers 11 mit einem Steuereingang 9D der Verstärkereinheit 9 verbunden.

Die Überwachungseinheit 13 veranlaßt durch entsprechende Ablaufsteuersignale ein Umschalten der Schalteinrichtungen 12 und 15 auf die Schaltkontakte C2 bzw. C1. Damit liegt an dem Eingang 6A des elektrooptischen Signalwandlers 6 das Referenz-Meßsignal REFM und am Eingang 11A des Reglers 11 das Ausgangssignal S. Zugleich wird der Regler 11 aktiviert und vergleicht nun das Ausgangssignal S als Regelgröße dieses zweiten Regelkreises mit einem vorgegebenen Ausgangssignal-Sollwert REFS, der auf das Referenz-Meßsignal REFM abgestimmt ist. Dieser Ausgangssignal-Sollwert REFS ist in der dargestellten Ausführungsform ebenfalls in dem Referenzsignalgeber 17 gespeichert. In Abhängigkeit von der Regeldifferenz REFS-S stellt nun der Regler 11 den Verstärkungsfaktor F über den Steuereingang 9D der Verstärkereinheit 9 solange, bis die Regeldifferenz REFS-S unter einem vorgegebenen Toleranzwert liegt.

Mit dem derart eingestellten Verstärkungsfaktor F wird wieder in den Meßmodus umgeschaltet durch Umlegen der Schalteinrichtungen 12 und 15 auf die Schaltkontakte B2 bzw. B1 und Deaktivieren des Reglers 11 und des Referenzmeßsignalgebers 14.

Um wahlweise den Auswertesignal-Sollwert REFS' bzw. den Ausgangssignal-Sollwert REFS auf den Eingang 11D des Reglers 11 zu schalten, ist eine Steuerleitung von einem Ausgang 13D der Überwachungseinheit 13 zum Referenzsignalgeber 17 vorgesehen.

Vorzugsweise wird eine Verstärkungskorrektur im Anschluß an eine Arbeitspunktkorrektur durchgeführt.

Die Ausführungsformen für den Verstärkungs-Korrekturmodus können mit allen Ausführungsformen für den Arbeitspunkt-Korrekturmodus kombiniert werden.

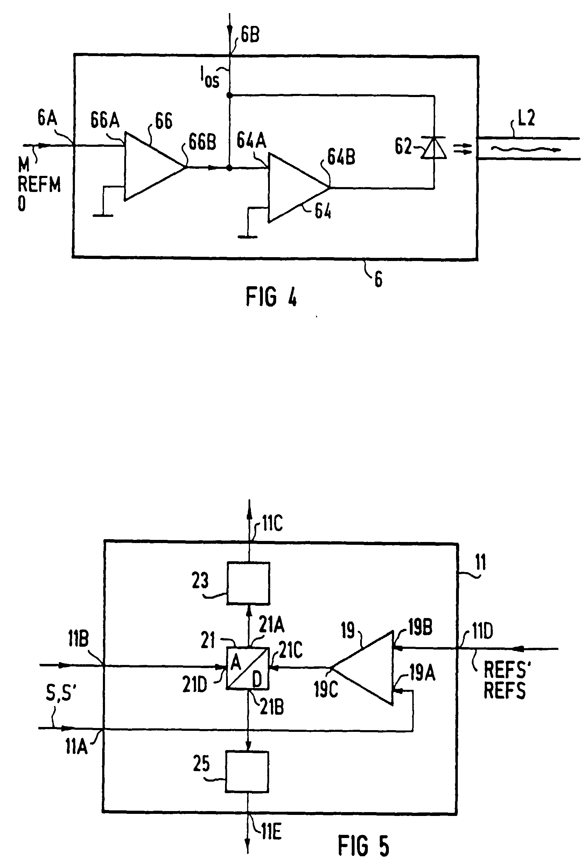

FIG. 4 zeigt eine Ausführungsform des elektrooptischen Signalwandlers 6 im Meßkopf 2. Zum Senden von Lichtsignalen in den Signallichtwellenleiter L2 ist eine LED 62 vorgesehen, die in eine Rückkopplungsschleife zwischen einen Eingang 64A und einen Ausgang 64B eines Operationsverstärkers 64 geschaltet ist. Mit demselben Eingang 64A des Operationsverstärkers 64 ist außerdem der Eingang 6B des Signalwandlers 6, der mit der - nicht dargestellten - Arbeitspunkt-Kontrolleinheit 8 verbunden ist, und ein Ausgang 66B eines zweiten Operationsverstärkers 66 verbunden. Ein Eingang 66A dieses zweiten Operationsverstärkers 66 ist mit dem Eingang 6A des Signalwandlers 6 verbunden, an dem ein über die Schalteinrichtung 12 geschaltetes Signal anliegt, das gleich dem Meßsignal M, dem Referenz-Meßsignal REFM oder einem Nullsignal 0 ist. Somit addieren sich an dem Eingang 64A des ersten Operationsverstärkers 64 ein Betriebsstrom in der Rückkopplungsschleife, der zum Betrieb der LED 62 dient, der zum Arbeitspunkt-Strom I_{OS} von der Arbeitspunkt-Kontrolleinheit 8 und ein im zweiten Operationsverstärker 66 aus der Signalspannung am Eingang 66A abgeleiteter Signalstrom vom Ausgang 66B dieses Operationsverstärkers 66. Durch die Rückkopplung wird der Betriebsstrom für die LED 62 in der Rückkopplungsschleife auf einen Wert geregelt, der gerade der Summe aus dem Arbeitspunkt-Strom I_{OS} und dem Signalstrom vom Ausgang 66B des Operationsverstärkers 66 entspricht. Im Arbeitspunkt-Korrekturmodus ist nun der Signalstrom Null, weil kein Meßsignal anliegt, und der Betriebsstrom der LED 62 ist gleich dem Arbeitspunkt-Strom I_{OS}.

In FIG. 5 ist eine Ausführungsform eines Reglers 11 dargestellt, der für die Arbeitspunkt- und Verstärkungskorrektur, beispielsweise in der Ausführungsform gemäß FIG. 3, eingesetzt werden kann. Der Regler 11 enthält einen Analogkomparator 19, beispielsweise einen Differenzverstärker, einen A/D-Wandler 21, einen Arbeitspunkt-Steller 23 und einen Verstärkungssteller 25. Ein Eingang 19A des Analogkomparators 19 ist mit dem Eingang 11A des Reglers 11 und der andere Eingang 19B des Analogkomparators 19 ist mit dem Eingang 11C des Reglers 11 verbunden.

Der Analogkomparator 19 vergleicht im Arbeitspunkt-Korrekturmodus das am Eingang 11A anliegende Auswertesignal S' und den am Eingang 11C anliegenden Auswertesignal-Sollwert REFS' und im Verstärkungs-Korrekturmodus entsprechend das Ausgangssignal S und den Ausgangssignal-Sollwert REFS. Das Vergleichsergebnis steht als analoge Regeldifferenz (REFS'-S') bzw. (REFS-S) an einem mit einem Eingang 21C des A/D-Wandlers 21 verbundenen Ausgang 19C des Analogkomparators 19 an und wird in dem A/D-Wandler 21 in einen digitalen Wert umgewandelt. Die digitale Regeldifferenz REFS'-S' wird über einen Ausgang 21A an den Arbeitspunkt-Steller 23 gegeben, der daraus ein entsprechendes Steuersignal zum mittelbaren oder unmittelbaren Stellen des Arbeitspunkt-Stromes I_{OS} des Signalwandlers 6 ableitet und auf den Ausgang 11D des Reglers 11 gibt. Die digitale Regeldifferenz REFS-S wird über einen Ausgang 21B des A/D-Wandlers 21 dem Verstärkungs-Steller 25 zugeführt, der daraus ein Steuersignal zum Stellen des Verstärkungsfaktors F der Verstärkereinheit 9 herleitet und auf den Ausgang 11E des Reglers 11 gibt. In dieser Ausführungsform sind sowohl der Auswertesignal-Sollwert REFS' als auch der Ausgangssignal-Sollwert REFS analog in dem nicht dargestellten Referenzsignalgeber 17 gespeichert.

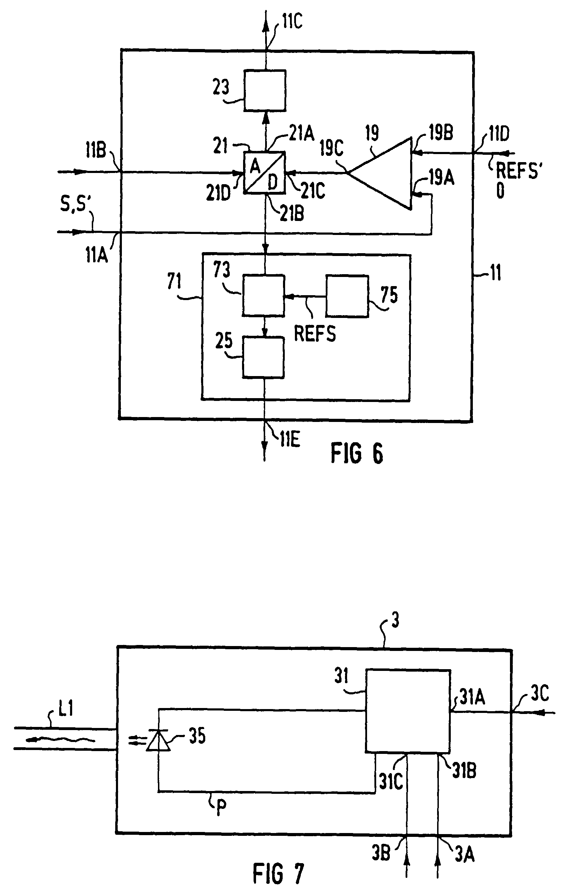

In einer anderen Ausführungsform des Reglers 11 gemäß FIG. 6 ist nur der Auswertesignal-Sollwert REFS' in dem Referenzsignalgeber 17 analog gespeichert. Es werden wieder das Auswertesignal S' und der Auswertesignal-Sollwert REFS' analog in dem Analogkomparator 19 verglichen, die Regeldifferenz REFS'-S' wird in dem A/D-Wandler 21 digitalisiert und dann dem Arbeitspunkt-Steller 23 zugeführt.

Der Ausgangssignal-Sollwert REFS ist dagegen digital in einem Digitalreferenzsignalgeber 75 gespeichert, der mit einem Eingang eines Digitalkomparators 73 verbunden ist. In diesem Digitalkomparator 73 wird das im A/D-Wandler 21 bereits digitalisierte Ausgangssignal S digital mit dem Ausgangssignal-Sollwert REFS verglichen. Die ermittelte digitale Regeldifferenz REFS-S wird dem Verstärkungs-Steller 25 zugeführt. Der Digitalkomparator 73, der Digitalreferenzsignalgeber 75 und der Verstärkungs-Steller 25 bilden zusammen einen digitalen Verstärkungsregler 71. Das an dem Eingang 19A des Analogkomparators 19 liegende Ausgangssignal S wird von dem Analogkomparator 19 direkt auf seinen Ausgang 19C durchgeschaltet, indem gleichzeitig an seinen zweiten Eingang 19B ein Nullsignal 0 gelegt wird.

In einer nicht dargestellten Ausführungsform kann auch umgekehrt das Ausgangssignal S analog mit seinem Ausgangssignal-Sollwert REFS in dem Analogkomparator verglichen werden, und das Auswertesignal S' wird digital mit dem Auswertesignal-Sollwert REFS' in einem Digitalkomparator verglichen. Außerdem können auch sowohl das Auswertesignal S' als auch das Ausgangssignal S erst digitalisiert und dann mit ihren Sollwerten digital verglichen werden.

FIG. 7 zeigt ein Ausführungsbeispiel für einen elektrooptischen Leistungswandler 3 mit einer Laserdiode 35, die mit einer Laserbetriebseinheit 31 in einer Schleife hintereinander geschaltet ist. Die Laserbetriebseinheit 31 versorgt die Laserdiode 35 mit der Leistung P. Die maximale Leistung ist dabei wegen der Regelungen höher auszulegen, als für die eigentliche Energieversorgung des Sensors notwendig ist. Zur Energieversorgung ist ein Eingang 31A der Laserbetriebseinheit 31 mit dem Eingang 3C des Leistungswandlers 3 verbunden, der wiederum mit der - nicht dargestellten - Energieversorgungseinheit 7 verbunden ist. Die Laserbetriebseinheit 31 enthält einen Modulator, der an einem ihrer Eingänge 31B oder 31C anliegende Steuersignale des - nicht dargestellten - Reglers 11 bzw. der - nicht dargestellten - Überwachungseinheit 13 moduliert und dem Leist.ungssignal überlagert. Die modulierten Steuersignale werden von der Laserdiode 35 als modulierte optische Signale in den Leistungslichtwellenleiter L1 abgestrahlt.

In einer nicht dargestellten Ausführungsform können auch mehrere Meßköpfe vorgesehen sein, die von der gleichen Fußstation versorgt werden und in denen verschiedene Meßgrößen gemessen werden können. Die Arbeitspunkte bzw. die Verstärkungsfaktoren dieser Meßköpfe können dann gemäß der Erfindung einzeln eingestellt werden.

## Patentansprüche

1. Verfahren zum Messen einer Meßgröße, bei dem
a) in einem Meßmodus
a1) die Meßgröße (Q) von wenigstens einem Sensor (22) in ein elektrisches Meßsignal (M) umgewandelt wird,
a2) die elektrische Energie für den Sensor (22) optisch von einem elektrooptischen Leistungswandler (3) zu einem optoelektrischen Leistungswandler (4) und von diesem zu dem Sensor (22) übertragen wird,
a3) das Meßsignal (M) des Sensors (22) an einen elektrooptischen Signalwandler (6) angelegt wird, als analoges optisches Signal von diesem elektrooptischen Signalwandler (6) zu einem optoelektrischen Signalwandler (5) übertragen wird und dort in ein elektrisches Auswertesignal (S') umgewandelt wird und
a4) dem elektrooptischen Signalwandler (6) zur Einstellung seines Arbeitspunktes ein vorgegebener Arbeitspunkt-Strom (I_{OS}) zugeführt wird,
**dadurch gekennzeichnet,** daß
b) zur Korrektur des Arbeitspunktes des elektrooptischen Signalwandlers (6) in einen Arbeitspunkt-Korrekturmodus umgeschaltet wird, in dem
b1) an den elektrooptischen Signalwandler (6) ein Nullsignal angelegt wird, das einem Meßsignal Null entspricht,
b2) das Auswertesignal (S') des optoelektrischen Signalwandlers (5) als Regelgröße gemessen wird und mit einem vorgegebenen, auf Meßsignal Null abgestimmten Auswertesignal-Sollwert (REFS') verglichen wird und
b3) der Arbeitspunktstrom (I_{OS}) solange verändert wird, bis die Abweichung zwischen dem Auswertesignal (S') und dem Auswertesignal-Sollwert (REFS') unter einem vorgegenenen Toleranzwert liegt.

2. Verfahren nach Anspruch 1, **dadurch gekennzeichnet,** daß eine Ablaufsteuerung für den Arbeitspunkt-Korrekturmodus vorgesehen wird mit Ablaufsteuersignalen zum Anlegen des Meßsignals Null an den elektrooptischen Signalwandler (6) und zum Ein- und Ausschalten der Regelung des Auswertesignals (S'), wobei diese Ablaufsteuersignale optisch von dem elektrooptischen Leistungswandler (3) zum optoelektrischen Leistungswandler (4) übertragen werden.

3. Verfahren nach Anspruch 1 oder 2, **dadurch gekennzeichnet,** daß der Arbeitspunkt-Strom (I_{OS}) für den elektrooptischen Signalwandler (6) durch Steuerung der Leistung (P) des elektrooptischen Leistungswandlers (3) analog gesteuert wird.

4. Verfahren nach Anspruch 1 oder 2, **dadurch gekennzeichnet,** daß der Arbeitspunkt-Strom (I_{OS}) für den elektrooptischen Signalwandler (6) durch von dem elektrooptischen Leistungswandler (3) zu dem optoelektrischen Leistungswandler (4) optisch digital übertragene und in einem Dekodierer (10) in analoge Steuersignale umgewandelte Arbeitspunkt-Steuersignale gesteuert wird.

5. Verfahren nach einem der vorhergehenden Ansprüche, **dadurch gekennzeichnet,** daß die Auswertesignale (S') in einer Verstärkereinheit (9) in Ausgangssignale (S) umgewandelt werden.

6. Verfahren nach Anspruch 5, **dadurch gekennzeichnet,** daß nach dem Einstellen des Auswertesignals (S') auf seinen Auswertesignal-Sollwert (REFS') das entsprechende Ausgangssignal (S) auf Null eingestellt wird.

7. Verfahren nach Anspruch 5 oder 6, **dadurch gekennzeichnet,** daß ein Verstärkungs-Korrekturmodus für die Verstärkereinheit (9) vorgesehen wird, der folgende Verfahrensschritte umfaßt:
a) an den elektrooptischen Signalwandler (6) wird ein vorgegebenes Referenz-Meßsignal (REFM) angelegt;
b) das Ausgangssignal (S) der Verstärkereinheit (9) wird als Regelgröße gemessen und.mit einem vorgegebenen, auf das Referenz-Meßsignal (REFM) abgestimmten Ausgangssignal-Sollwert (REFS) verglichen und
c) ein Verstärkungsfaktor (F) der Verstärkereinheit (9) wird als Stellgröße solange verändert, bis die Abweichung zwischen dem Ausgangssignal (S) und dem Ausgangssignal-Sollwert (REFS) unter einem vorgegebenen Toleranzwert liegt.

8. Verfahren nach Anspruch 7, **dadurch gekennzeichnet,** daß eine Ablaufsteuerung für den Verstärkungs-Korrekturmodus vorgesehen wird mit Ablaufsteuersignalen zum Anlegen des Referenz-Meßsignals (REFM) an den elektrooptischen Signalwandler (6) und zum Ein- und Ausschalten der Regelung des Ausgangssignals (S), wobei die Ablaufsteuersignale optisch von dem elektrooptischen Leistungswandler (3) zu dem optoelektrischen Leistungswandler (4) übertragen werden.

9. Vorrichtung zum Messen einer Meßgröße, bei der
a) wenigstens ein Meßkopf (2) vorgesehen ist, der
a1) einen optoelektrischen Leistungswandler (4) zum Umwanaeln von optischer Energie in elektrische Energie,
a2) wenigstens einen von diesem Leistungswandler (4) mit elektrischer Energie versorgten Sensor (22) zum Umwandeln der Meßgröße (Q) in ein elektrisches Meßsignal (M),
a3) einen mit dem Sensor (22) verbindbaren elektrooptischen Signalwandler (6) zum Umwandeln der elektrischen Meßsignale (M) des Sensors (22) in analoge optische Signale sowie
a4) eine Arbeitspunkt-Kontrolleinheit (8) zur Versorgung des elektrooptischen Signalwandlers (6) mit einem vorgegebenen Arbeitspunkt-Strom (I_{OS})
enthält, und
b) eine Fußstation (1) vorgesehen ist, die
b1) einen mit dem optoelektrischen Leistungswandler (4) optisch gekoppelten elektrooptischen Leistungswandler (3) zum Umwandeln der von einer Energieversorgungseinheit (7) gelieferten elektrischen Energie in optische Energie und
b2) einen mit dem elektrooptischen Signalwandler (6) optisch gekoppelten optoelektrischen Signalwandler (5), der die analogen optischen Signale in elektrische Auswertesignale (S') umwandelt,
enthält,
**dadurch gekennzeichnet,** daß
c) eine Schalteinrichtung (12) zum Anlegen von wahlweise dem Meßsignal (M) in einem Meßmodus oder einem Nullsignal, das einem Meßsignal Null entspricht, in einem Arbeitspunkt-Korrekturmodus an den elektrooptischen Signalwandler (6)
und
d) ein Regler (11) zum Regeln des Auswertesignals (S') auf wenigstens annähernd einen Auswertesignal-Sollwert (REFS') in dem Arbeitspunkt-Korrekturmodus durch unmittelbares oder mittelbares Stellen des Arbeitspunkt-Stromes (I_{OS}) des elektrooptischen Signalwandlers (6), wenn an diesem das Nullsignal anliegt,
vorgesehen sind.

10. Vorrichtung nach Anspruch 9, **dadurch gekennzeichnet,** daß
a) ein Dekodierer (10) zum Dekodieren von über den elektrooptischen Leistungswandler (3) zu dem optoelektrischen Leistungswandler (4) optisch übertragenen Steuersignalen vorgesehen ist, die zum Ansteuern der Schalteinrichtung (12) sowie zum Ansteuern der Arbeitspunkt-Kontrolleinheit (8) zum Einstellen des Arbeitspunktes des elektrooptischen Signalwandlers (6) vorgesehen sind;
b) wenigstens ein Referenzsignalgeber (17) zum Erzeugen eines vorgegebenen Auswertesignal-Sollwertes (REFS') vorgesehen ist;
c) eine Überwachungseinheit (13) mit einer Ablaufsteuerung für den Arbeitspunkt-Korrekturmodus vorgesehen ist, die zum Übertragen von Steuersignalen zum Dekodierer (10) mit dem elektrooptischen Leistungswandler (3), zum Ein- oder Ausschalten des Reglers (11) mit dem Regler (11) sowie zum Anlegen von dem Auswertesignal (S') oder einem Nullsignal an den Regler (11) mit einer Schalteinrichtung (15) verbunden ist.

11. Vorrichtung nach Anspruch 9 oder 10, **dadurch gekennzeichnet,** daß eine Verstärkereinheit (9) zum Umwandeln der Auswertesignale (S') in Ausgangssignale (S) vorgesehen ist.

12. Vorrichtung nach Anspruch 11, **dadurch gekennzeichnet,** daß ein mit der Überwachungseinheit (13), einem Ausgang (9A) der Verstärkereinheit (9) und einem Steuereingang (9C) der Verstärkereinheit (9) elektrisch verbundener Stromregler (91) zum Einstellen des Ausgangssignals (S) auf Null, nachdem das Auswertesignal (S') auf seinen Auswertesignal-Sollwert (REFS') geregelt ist, vorgesehen ist.

13. Vorrichtung nach einem der Ansprüche 9 bis 12, **dadurch gekennzeichnet,** daß
a) im Meßkopf (2) ein Referenz-Meßsignalgeber (14) zum Erzeugen eines vorgegebenen Referenz-Meßsignals (REFM) vorgesehen ist,
b) dieser Referenz-Meßsignalgeber (14) über die Schalteinrichtung (12) mit dem Eingang (6A) des elektrooptischen Signalwandlers (6) verbindbar ist,
c) ein Eingang (11A) des Reglers (11) über die Schalteinrichtung (15) mit einem Ausgang (9A) der Verstärkereinheit (9) verbindbar ist, an dem das Ausgangssignal (S) anliegt.
d) der Regler (11) in einem Verstärkungs-Korrekturmodus zum Regeln des Ausgangssignals (S) auf wenigstens annähernd einen vorgegebenen, auf das Referenz-Meßsignal (REFM) abgestimmten Ausgangssignal-Sollwert (REFS) durch Stellen des Verstärkungsfaktors (F) der Verstärkereinheit (9), wenn am elektrooptischen Signalwandler (6) das Referenz-Meßsignal (REFM) anliegt, vorgesehen ist;
e) die Überwachungseinheit (13) mit einer Ablaufsteuerung für den Verstärkungs-Korrekturmodus versehen ist;

14. Vorrichtung nach einem der Ansprüche 9 bis 13, **dadurch gekennzeichnet,** daß
a) der elektrooptische Leistungswandler (3) und der elektrooptische Leistungswandler (4) durch einen Leistungslichtwellenleiter (L1) miteinander verbunden sind und
b) der elektrooptische Signalwandler (6) und der elektrooptische Signalwandler (5) durch einen Signallichtwellenleiter (L2) miteinander verbunden sind.

## Claims

1. Method for measuring a measured variable, in which
a) in a measurement mode,
a1) the measured variable (Q) is converted by at least one sensor (22) into an electrical measurement signal (M),
a2) the electrical power for the sensor (22) is transmitted optically from an electrooptical power converter (3) to an optoelectrical power converter (4) and from the latter to the sensor (22),
a3) the measurement signal (M) of the sensor (22) is applied to an electrooptical signal converter (6), transmitted as analog optical signal from said electrooptical signal converter (6) to an optoelectrical signal converter (5) and converted therein into an electrical evaluation signal (S') and
a4) a specified working-point current (I_{OS}) is fed to the electrooptical signal converter (6) to adjust its working point,
characterized in that b) to correct the working point of the electrooptical signal converter (6), switching is carried out in a working-point correction mode in which
b1) there is applied to the electrooptical signal converter (6) a zero signal which corresponds to a zero measurement signal,
b2) the evaluation signal (S') of the optoelectrical signal converter (5) is measured as controlled variable and compared with a specified evaluation-signal set-point value (REFS') matched to the zero measurement signal and
b3) the working-point current (I_{OS}) is altered until the deviation between the evaluation signal (S') and the evaluation-signal set-point value (REFS') is below a specified tolerance value.

2. Method according to Claim 1, characterized in that a sequence control system is provided for the working-point correction mode, with sequence control signals for applying the zero measurement signal to the electrooptical signal converter (6) and for switching the regulation of the evaluation signal (S') on and off, said sequence control signals being transmitted optically from the electrooptical power converter (3) to the optoelectrical power converter (4).

3. Method according to Claim 1 or 2, characterized in that the working-point current (I_{OS}) for the electrooptical signal converter (6) is controlled in analog form by controlling the power (P) of the electrooptical power converter (3).

4. Method according to Claim 1 or 2, characterized in that the working-point current (I_{OS}) for the electrooptical signal converter (6) is controlled by working-point control signals transmitted optically in digital form from the electrooptical power converter (3) to the optoelectrical power converter (4) and converted into analog control signals in a decoder (10).

5. Method according to one of the preceding claims, characterized in that the evaluation signals (S') are converted into output signals (S) in an amplifier unit (9).

6. Method according to Claim 5, characterized in that, after the evaluation signal (S') has been adjusted to its evaluation-signal set-point value (REFS'), the corresponding output signal (S) is adjusted to zero.

7. Method according to Claim 5 or 6, characterized in that there is provided, for the amplifier unit (9), a gain correction mode which comprises the following method steps:
a) a specified reference measurement signal (REFM) is applied to the electrooptical signal converter (6);
b) the output signal (S) of the amplifier unit (9) is measured as controlled variable and compared with a specified output-signal set-point value (REFS) matched to the reference measurement signal (REFM) and
c) a gain factor (F) of the amplifier unit (9) is altered as manipulated value until the deviation between the output signal (S) and the output-signal set-point value (REFS) is below a specified tolerance value.

8. Method according to Claim 7, characterized in that a sequence control system is provided for the gain correction mode, with sequence control signals for applying the reference measurement signal (REFM) to the electrooptical signal converter (6) and for switching the regulation of the output signal (S) on and off, the sequence control signals being transmitted optically from the electrooptical power converter (3) to the optoelectrical power converter (4).

9. Device for measuring a measured variable, in which
a) at least one measuring head (2) is provided which contains
a1) an optoelectrical power converter (4) for converting optical power into electrical power,
a2) at least one sensor (22), supplied with electrical energy by said power converter (4), for converting the measured variable (Q) into an electrical measurement signal (M),
a3) an electrooptical signal converter (6), connectable to the sensor (22), for converting the electrical measurement signals (M) of the sensor (22) into analog optical signals and also
a4) a working-point monitoring unit (8) for supplying the electrooptical signal converter (6) with a specified working-point current (I_{OS})
and
b) a base station (1) is provided which contains
b1) an electrooptical power converter (3), optically coupled to the optoelectrical power converter (4), for converting the electrical power supplied by a power supply unit (7) into optical power and
b2) an optoelectrical signal converter (5), optically coupled to the electrooptical signal converter (6), which converts the analog optical signals into electrical evaluation signals (S'),
characterized in that
c) a switching device (12) for applying alternatively the measurement signal (M) in a measurement mode or a zero signal, corresponding to a zero measurement signal, in a working-point correction mode to the electrooptical signal converter (6)
and
d) a regulator (11) for regulating the evaluation signal (S') to at least approximately an evaluation-signal set-point value (REFS') in the working-point correction mode by directly or indirectly setting the working point current (I_{OS}) of the electrooptical signal converter (6) if the zero signal is present at the latter,
are provided.

10. Device according to Claim 9, characterized in that
a) a decoder (10) is provided for decoding control signals which are optically transmitted via the electrooptical power converter (3) to the optoelectrical power converter (4) and which are provided for driving the switching device (12) and for driving the working-point monitoring unit (8) to adjust the working point of the electrooptical signal converter (6);
b) at least one reference signal generator (17) is provided for generating a specified evaluation-signal set-point value (REFS');
c) a monitoring unit (13) having a sequence control system is provided for the working-point correction mode, which monitoring unit (13) is connected to the electrooptical power converter (3) for transmitting control signals to the decoder (10), to the regulator (11) for switching the regulator (11) on and off and also to a switching device (15) for applying the evaluation signal (S') or a zero signal to the regulator (11).

11. Device according to Claim 9 or 10, characterized in that an amplifier unit (9) is provided for converting the evaluation signals (S') into output signals (S).

12. Device according to Claim 11, characterized in that a current regulator (91) is provided, which is electrically connected to the monitoring unit (13), an output (9A) of the amplifier unit (9) and a control input (9C) of the amplifier unit (9), for adjusting the output signal (S) to zero after the evaluation signal (S') has been regulated to its evaluation-signal set-point value (REFS').

13. Device according to one of Claims 9 to 12, characterized in that
a) a reference measurement signal generator (14) is provided in the measuring head (2) for generating a specified reference measurement signal (REFM),
b) said reference measurement signal generator (14) is connectable to the input (6A) of the electrooptical signal converter (6) via the switching device (12),
c) an input (11A) of the regulator (11) is connectable via the switching device (15) to an output (9A) of the amplifier unit (9) at which the output signal (S) is present,
d) the regulator (11) is provided in a gain correction mode for regulating the output signal (S) to at least approximately a specified output-signal set-point value (REFS), matched to the reference measurement signal (REFM), by adjusting the gain factor (F) of the amplifier unit (9) if the reference measurement signal (REFM) is present at the electrooptical signal converter (6);
e) the watchdog unit (13) is provided with a sequence control system for the gain correction mode.

14. Device according to one of Claims 9 to 13,
characterized in that
a) the electrooptical power converter (3) and the optoelectrical power converter (4) are interconnected by a power optical waveguide (L1) and
b) the electrooptical signal converter (6) and the optoelectrical signal converter (5) are interconnected by a signal optical waveguide (L2).

## Revendications

1. Procédé pour mesurer une grandeur de mesure, selon lequel
a) dans un mode de mesure
a1) on convertit par au moins un capteur (22) la grandeur de mesure (Q) en un signal de mesure (M) électrique,
a2) on transmet l'énergie électrique destinée au capteur (22), de façon optique, d'un convertisseur électro-optique de puissance (3) à un convertisseur opto-électrique de puissance (4) et ensuite de ce dernier au capteur (22),
a3) on applique le signal de mesure (M) du capteur (22) à un convertisseur électro-optique de signaux (6), on le transmet sous forme de signal analogique optique de ce convertisseur électro-optique de signaux (6) à un convertisseur opto-électrique de signaux (5) et on le convertit là en un signal d'évaluation (S') électrique, et
a4) on envoie au convertisseur électro-optique de signaux (6) pour la régulation de son point de fonctionnement un courant de point de fonctionnement (I_{OS}) prédéterminé,
caractérisé par le fait que b) pour la correction du point de fonctionnement du convertisseur électro-optique de signaux (6), on passe dans un mode de correction de point de fonctionnement dans lequel
b1) on applique au convertisseur électro-optique de signaux (6) un signal nul qui correspond à un signal de mesure nul,
b2) on mesure comme grandeur réglée le signal d'évaluation (S') du convertisseur opto-électrique de signaux (5) et on le compare à une valeur de consigne de signal d'évaluation (REFS') prédéterminée et adaptée au signal de mesure nul, et
b3) on modifie le courant de point de fonctionnement (I_{OS}) jusqu'à ce que l'écart entre le signal d'évaluation (S') et la valeur de consigne de signal d'évaluation (REFS') se trouve en dessous d'une valeur de tolérance prédéterminée.

2. Procédé selon la revendication 1, caractérisé par le fait que l'on prévoit une commande séquentielle pour le mode de correction de point de fonctionnement avec des signaux de commande séquentielle destinés à appliquer le signal de mesure nul au convertisseur électro-optique de signaux (6) et à démarrer et arrêter la régulation du signal d'évaluation (S'), ces signaux de commande séquentielle étant transmis de façon optique du convertisseur électro-optique de puissance (3) au convertisseur opto-électrique de puissance (4).

3. Procédé selon la revendication 1 ou 2, caractérisé par le fait que le courant de point de fonctionnement (I_{OS}) pour le convertisseur électro-optique de signaux (6) est commandé de façon analogique par la commande de la puissance (P) du convertisseur électro-optique de puissance (3).

4. Procédé selon la revendication 1 ou 2, caractérisé par le fait que le courant de point de fonctionnement (I_{OS}) pour le convertisseur électro-optique de signaux (6) est commandé par des signaux de commande de point de fonctionnement transmis de façon optique numérique du convertisseur électro-optique de puissance (3) au convertisseur opto-électrique de puissance (4) et convertis dans un décodeur (10) en signaux de commande analogiques.

5. Procédé selon l'une des revendications précédentes, caractérisé par le fait que les signaux d'évaluation (S') sont convertis dans une unité amplificatrice (9) en signaux de sortie (S).

6. Procédé selon la revendication 5, caractérisé par le fait que, après le réglage du signal d'évaluation (S') sur sa valeur de consigne de signal d'évaluation (REFS'), on règle sur zéro le signal de sortie (S) correspondant.

7. Procédé selon la revendication 5 ou 6, caractérisé par le fait que l'on prévoit un mode de correction d'amplification, pour l'unité amplificatrice (9), qui comprend les étapes suivantes :
a) on applique au convertisseur électro-optique de signaux (6) un signal de mesure de référence (REFM) prédéterminé,
b) on mesure comme grandeur réglée le signal de sortie (S) de l'unité amplificatrice (9) et on le compare à une valeur de consigne de signal de sortie (REFS) prédéterminée et adaptée au signal de mesure de référence (REFM), et
c) on modifie comme grandeur réglante un facteur d'amplification (F) de l'unité amplificatrice (9) jusqu'à ce que l'écart entre le signal de sortie (S) et la valeur de consigne de signal de sortie (REFS) se trouve en dessous d'une valeur de tolérance prédéterminée.

8. Procédé selon la revendication 7, caractérisé par le fait que l'on prévoit une commande séquentielle pour le mode de correction d'amplification avec des signaux de commande séquentielle destinés à appliquer le signal de mesure de référence (REFM) au convertisseur électro-optique de signaux (6) et à démarrer et arrêter la régulation du signal de sortie (S), les signaux de commande séquentielle étant transmis de façon optique du convertisseur électro-optique de puissance (3) au convertisseur opto-électrique de puissance (4).

9. Dispositif pour mesurer une grandeur de mesure, dans lequel
a) on prévoit au moins une tête de mesure (2) qui contient
a1) un convertisseur opto-électrique de puissance (4) pour convertir l'énergie optique en énergie électrique,
a2) au moins un capteur (22) alimenté en énergie électrique par ce convertisseur de puissance (4) et destiné à convertir la grandeur de mesure (Q) en un signal de mesure (M) électrique,
a3) un convertisseur électro-optique de signaux (6) pouvant être relié au capteur (22) et destiné à convertir les signaux de mesure (M) électriques du capteur (22) en des signaux analogiques optiques, et
a4) une unité de contrôle de point de fonctionnement (8) destinée à alimenter le convertisseur électro-optique de signaux (6) avec un courant de point de fonctionnement (I_{OS}) prédéterminé, et
b) on prévoit un poste de base (1) qui contient
b1) un convertisseur électro-optique de puissance (3) relié de façon optique au convertisseur opto-électrique de puissance (4) et destiné à convertir l'énergie électrique fournie par une unité d'alimentation en énergie (7) en énergie optique, et
b2) un convertisseur opto-électrique de signaux (5) relié de façon optique au convertisseur électro-optique de signaux (6) et convertissant les signaux analogiques optiques en des signaux d'évaluation (S') optiques,
caractérisé par le fait qu'on prévoit
c) un commutateur (12) destiné à appliquer au convertisseur électro-optique de signaux (6), au choix, le signal de mesure (M) dans un mode de mesure ou un signal nul, qui correspond à un signal de mesure nul, dans un mode de correction de point de fonctionnement, et
d) un régulateur (11) destiné à régler au moins approximativement le signal d'évaluation (S') sur une valeur de consigne de signal d'évaluation (REPS') dans le mode de correction de point de fonctionnement par un réglage direct ou indirect du courant de point de fonctionnement (I_{OS}) du convertisseur électro-optique de signaux (6) lorsque le signal nul se trouve à ce convertisseur.

10. Dispositif selon la revendication 9, caractérisé par le fait que
a) on prévoit un décodeur (10) pour décoder des signaux de commande qui sont transmis de façon optique du convertisseur électro-optique de puissance (3) au convertisseur opto-électrique de puissance (4) et qui sont prévus pour commander le commutateur (12) ainsi que pour commander l'unité de contrôle de point de fonctionnement (8) en vue du réglage du point de fonctionnement du convertisseur électro-optique de signaux (6)
b) on prévoit au moins un générateur de signal de référence (17) pour produire une valeur de consigne de signal d'évaluation (REFS') prédéterminée ;
c) on prévoit une unité de contrôle (13) avec une commande séquentielle pour le mode de correction de point de fonctionnement, qui est reliée au convertisseur électro-optique de puissance (3) pour transmettre des signaux de commande au décodeur (10), au régulateur (11) pour démarrer ou arrêter le régulateur (11) et à un commutateur (15) pour appliquer au régulateur (11) le signal d'évaluation (S') ou un signal nul.

11. Dispositif selon la revendication 9 ou 10, caractérisé par le fait qu'une unité amplificatrice (9) est prévue pour convertir les signaux d'évaluation (S') en signaux de sortie (S).

12. Dispositif selon la revendication 11, caractérisé par le fait qu'un régulateur de courant (91), relié électriquement à l'unité de contrôle (13), à une sortie (9A) de l'unité amplificatrice (9) et à une entrée de commande (9C) de l'unité amplificatrice (9), est prévu pour régler le signal de sortie (S) à zéro après que le signal d'évaluation (S') a été réglé sur sa valeur de consigne de signal d'évaluation (REFS').

13. Dispositif selon l'une des revendications 9 à 12, caractérisé par le fait que
a) dans la tête de mesure (2), un générateur de signal de mesure de référence (14) est prévu pour produire un signal de mesure de référence (REFM) prédéterminé,
b) ce générateur de signal de mesure de référence (14) peut être relié par l'intermédiaire du commutateur (12) à l'entrée (6A) du convertisseur électro-optique de signaux (6),
c) une entrée (11A) du régulateur (11) peut être reliée par l'intermédiaire du commutateur (15) à une sortie (9A) de l'unité amplificatrice (9) à laquelle se trouve le signal de sortie (S),
d) dans un mode de correction d'amplification, le régulateur (11) est prévu pour régler au moins approximativement le signal de sortie (S) sur une valeur de consigne de signal de sortie (REFS) prédéterminée et adaptée au signal de mesure de référence (REFM), par réglage du facteur d'amplification (F) de l'unité amplificatrice (9) lorsque le signal de mesure de référence (REFM) est appliqué au convertisseur électro-optique de signaux (6),
e) l'unité de contrôle (13) est munie d'une commande séquentielle pour le mode de correction d'amplification.

14. Dispositif selon l'une des revendications 9 à 13, caractérisé par le fait que
a) le convertisseur électro-optique de puissance (3) et le convertisseur électro-optique de puissance (4) sont reliés ensemble par l'intermédiaire d'un guide d'ondes lumineuses de puissance (L1) et
b) le convertisseur électro-optique de signaux (6) et le convertisseur électro-optique de signaux (5) sont reliés ensemble par l'intermédiaire d'un guide d'ondes lumineuses de signaux (L2).
